# EUROPÄISCHE PATENTSCHRIFT

(11) **EP 1 252 286 B1**
(45) Veröffentlichungstag und Bekanntmachung des Hinweises auf die Patenterteilung: **17.03.2004**
(21) Anmeldenummer: 00987474.4
(22) Anmeldetag: 30.12.2000
(51) Int. Cl.: C12G 1/02

(54) **ZENTRIFUGALE TRENNVORRICHTUNG UND VERFAHREN ZUR KLÄRUNG VON MOST BEI DER HERSTELLUNG VON WEIN**
CENTRIFUGAL SEPARATING DEVICE AND METHOD FOR CLARIFYING MUST DURING THE PRODUCTION OF WINE
DISPOSITIF DE SEPARATION CENTRIFUGE ET PROCEDE DE CLARIFICATION DU MOUT DANS LA FABRICATION DE VIN

(30) Priorität: 04.02.2000 DE 10004907
(43) Veröffentlichungstag der Anmeldung: 30.10.2002
(73) Patentinhaber: Westfalia Separator AG, 59302 Oelde (DE)
(72) Erfinder: SCHAUZ, Frank, 59302 Oelde (DE); SCHMID, Ulrich, 73776 Altbach (DE)
(74) Vertreter: Dantz, Jan Henning
(86) Internationale Anmeldenummer: PCT/EP2000/013341
(87) Internationale Veröffentlichungsnummer: WO 2001/057177

(56) Entgegenhaltungen:
- EP-A- 0 671 465
- EP-A- 0 978 482
- WO-A-91/05847
- CH-A- 622 820
- DE-A- 4 206 206
- DATABASE FSTA [Online] INTERNATIONAL FOOD INFORMATION SERVICE (IFIS), FRANFURT/MAIN, DE; BARDINI G ET AL: "Continuous clarification of grape must by flotation." Database accession no. 92-1-08-h0124 XP002164621 & VINI D'ITALIA 1992 TMCI PADOVAN, CONEGLIANO, ITALY, Bd. 34, Nr. 1, Seiten 31-38,
- DATABASE WPI Section Ch, Week 199403 Derwent Publications Ltd., London, GB; Class D16, AN 1994-024084 XP002164622 & SU 1 784 636 A (YALOVENY RES PRODN ASSOC), 30. Dezember 1992 (1992-12-30)

## Beschreibung

Die Erfindung betrifft eine zentrifugale Trennvorrichtung zur Klärung von Most bei der Herstellung von Wein nach dem Oberbegriff des Anspruches 1 und ein Verfahren zur Klärung von Most bei der Herstellung von Wein nach dem Oberbegriff des Anspruches 5.

In der Firmenschrift "Separatoren und Dekanter in Weinkellereien" der Westfalia Separator AG, Oelde, Deutschland, 1992 wird auf S. 6 der Einsatz von Separatoren und Dekantern bei der Weinherstellung beschrieben. Zunächst wird die Traubenmaische in einen Vorentsafter geleitet. Die derart vorentsaftete Maische wird sodann einer Presse zugeleitet. Das solcherart gewonnene Ausgangsprodukt wird dann - ggf. nach einem optionalen Sieben in einem Drehbürstensieb - in einen Mosttank geleitet. Man kann den Most im Tank nach dem Pressen z. B. noch mit Gelatine schönen. Nach einer Verweilzeit im Tank wird der Most dann in einen Klärseparator und der geklärte Most aus dem Separator direkt in den Gärtank geleitet.

Analoges ist aus der weiteren Firmenschrift von J. Hamatschek et al "Separatoren und Dekanter für die qualitätsbewußte Weinbereitung" der Westfalia Separator AG, Oelde, Deutschland, 1992 bekannt.

Die CH-A-622 820 zeigt als gattungsgemäßen Stand der Technik eine Anlage und ein Verfahren zur Klärung von Most mit einem Zentrifugalseparator und einer Flotationseinrichtung. Der Most von dem Separator wird über eine Leitung zuerst zu einem Entpektinisiertank und dann zu der Flotationseinrichtung geführt.

Die WO-A-91/05847 offenbart eine Anlage und ein Verfahren zur Klärung von Rohsaft, bei der eine kontinuierliche Verschönungseinrichtung (z.B. eine Flotationseinrichtung) an eine Querstromfiltrationsanlage angeschlossen wird. Ein Zentrifugalseparator kann in sehr schwierigen Fällen zwischen der Verschönungseinrichtung und der Querstromfiltrationsanlage angeordnet werden.

Die DE-A-42 06 206 offenbart eine Anlage und ein Verfahren zur Aufbereitung von Altpapier, bei dem das Papier nach mehreren Vorreinigungsstufen (z.B. mittels Fliehkraft in einem Hydrozyklon) in einer (ersten) Flotationsanlage behandelt wird. Das daraus entstandene Abfallwasser wird in einer (zweiten) Druckentspannungs-Flotationsanlage gereinigt.

Gegenüber dem nächstkommenden Stand der Technik - der CH-A-622 820 - ist es die Aufgabe der Erfindung, eine vereinfachte und verbesserte Vorrichtung und ein Verfahren zur Klärung von Most bereitzustellen.

Die Erfindung löst diese Aufgabe in Hinsicht auf die Trennvorrichtung durch den Gegenstand des Anspruches 1.

In Hinsicht auf das Verfahren löst sie es durch den Gegenstand des Anspruches.

Bei dieser Vorgehensweise wird bei geeigneter Parameterwahl zum einen der Feintrub, der direkt nach dem Separator in Schwebe bleibt, durch die Flotation zum erheblichen Anteil entfernt, zum anderen wird selbst abschleuderbarer Feststoff, den der Separator nicht abgetrennt hat, flotiert.

Zwar ist die Flotation von Most selbstverständlich an sich bekannt. Nach dem Stand der Technik wird die Flotation aber für sich allein zur Mostklärung eingesetzt. Bei diesem konventionellen Verfahren zur Mostklärung wird der Most über zwei geräteeigene Druckpumpen über ein Eingangsventil kontinuierlich in einen unter Druck (bis 6 bar) stehenden Imprägnierungskessel gepumpt. Im Fließstrom wird dann mit einer Dosierpumpe Gelatine und Luft kontinuierlich zudosiert. Hierbei erfolgt eine Gasanreicherung des Mostes, welcher, ebenfalls kontinuierlich, über das Ausgangsventil den Druckbehälter wieder verläßt. Der Most wird in Zwischenbehälter geleitet, in dem die Flotation erfolgt, so daß der Trub zum Flüssigkeitsspiegel hochsteigt. Es entsteht eine kompakte Trubmenge mit einer großen Fraktion Schaum.

Im Rahmen der Erfindung hat es sich nunmehr überraschend als besonders vorteilhaft herausgestellt, die Flotation direkt dem Separator nachzuschalten bzw. die Flotation unmittelbar mit einem Trennklären im Zentrifugalfeld des Separators zu kombinieren. Direkt vor dem Konstantdruckventil werden beispielsweise sterile Luft und Gelatine in einen statischen Mischer dosiert oder über entsprechende Rohrzuleitungen direkt in den Ablauf geleitet. Hierbei nutzt man im Ablauf vom Separator den hohen Ablaufdruck von 5 bis 6 bar, der notwendig ist, um Sauerstoff in ausreichender Menge und in kleinen Bläschen im Produkt lösen zu können.

Die Erfindung kombiniert somit ein Flotationsverfahren zur Mostklärung mit einer Mostklärung im Separator. Diese Vorgehensweise hat eine ganze Reihe von Vorteilen.

So ist der Verbrauch an Gelatine und Luft etwa um die fünffache Menge geringer als bei herkömmlichen Flotationsverfahren, da der Großteil der Feststoffe vom Separator bereits entfernt wurde. Darüber hinaus entsteht ungefähr zehnmal weniger Schaum als bei einer Flotation ohne vorgeschalteten Separator. Auch leicht angegorener und kalter Most (10°C), der mit einer herkömmlichen alleinigen Flotation schwierig zu klären ist, kann ohne Probleme im Separator mit der diesem direkt zugeordneten (vorzugsweise nachgeschalteten) Flotation im Ablauf gut geklärt werden.

Die Erfindung bietet aber noch einen weiteren entscheidenden Vorteil. Der Separator kann mit höheren Durchsatzleistungen bei dadurch ungünstigeren Klärgrad gefahren werden, da der verbleibende Trub bei der nachgeschalteten Flotation nochmals deutlich reduziert wird. Dies ermöglicht eine große Zeitersparnis.

Dadurch, daß der im Ablauf des Separator bestehende hohe Ablaufdruck für die Flotation genutzt wird, ergibt sich zudem der Vorteil, daß keine teuren Druckpumpen und unter Druck stehende Behälter notwendig sind. Hierdurch sinken die Investitionskosten.

Die Anschaffung des Separators bietet zudem auch die Möglichkeit zum Einsatz bei der Jungweinklärung, zum Schönungsabstich, zur Trubaufbereitung und zur Weinsteinabtrennung.

Besonders bevorzugt wird die Flotationseinrichtung in den Ablauf der Trennvorrichtung und vor deren Konstantdruckventil geschaltet und/oder umfaßt eine Dosiereinrichtung zur Einbringung von Luft und/oder Gelantine und/oder anderen Zusatzstoffen in den aus der Trennvorrichtung abgeleiteten, geklärten Most.

Weitere vorteilhafte Ausführungsformen der Erfindung sind den übrigen Unteransprüchen zu entnehmen.

Nachfolgend wird die Erfindung anhand von verschiedenen Ausführungsbeispielen unter Bezug auf die Zeichnung näher beschrieben. Es zeigt:
- Fig. 1: eine Darstellung einer Anlage mit einer Trennvorrichtung nach Art der Erfindung; und
- Fig. 2: ein Flußdiagramm zur Herstellung von Klärung von Most bei der Herstellung von Wein unter Nutzung der Anlage aus Fig. 1.

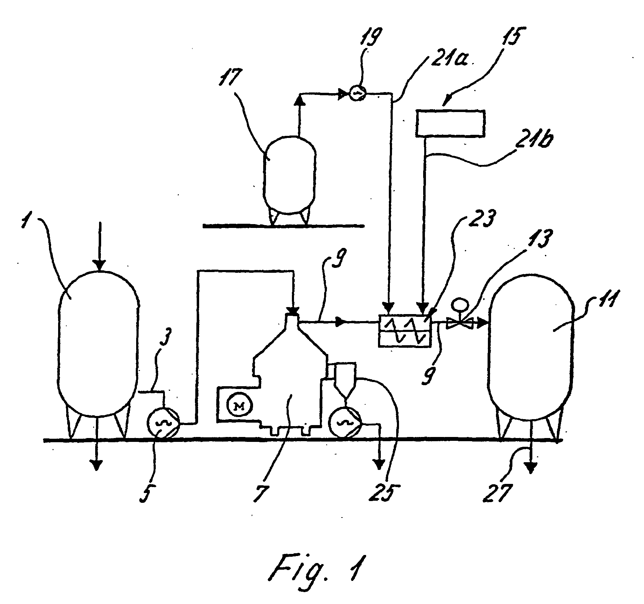

Nach Fig. 1 wird Most aus einem Tank 1 über eine Leitung 3 mit einer Pumpe 5 in einen Klärseparator 7 geleitet (gepumpt), wo eine Klärung des Mosts im Zentrifugalfeld erfolgt. Die Feststoffe werden aus dem Klärseparator 7 über den Feststoffaustrag 25 abgeführt.

Der im Klärseparator geklärte Most wird über einen Ablauf 9 in einen Entspannungstank 11 geleitet, dem ein Konstantdruckventil 13 vorgeschaltet ist. In den Ablauf 9 mündet eine Flotationseinrichtung 15, welche das dosierte Zuführen von Luft und/oder Gelantine in den Ablaufbereich unmittelbar vor dem Konstantdruckventil 13 erlaubt. Die Flotationseinrichtung umfaßt einen Gelantinetank 17, aus dem über eine Pumpe 19 und Leitungen 21a sowie einen Mischer 23 die Gelantine und/oder über weitere Leitungen 21b und über den Mischer 23 Gas und/oder andere Stoffe in den Ablauf 9 einleitbar sind. Vorzugsweise erfolgt die Zuleitung der Luft und der Gelantine in den Ablauf 9 über einen (hier nicht dargestellten) statischen Mischer 23.

Bevorzugt werden dem Most bei der Flotation 1 bis 4 g/hl Gelantine, vorzugsweise 2 bis 3 g/hl Gelatine und 60-70 l/m³ Luft zugesetzt.

Aus dem Entspannungstank 11 wird der Most nach unten hin durch eine Leitung 27 abgelassen, so daß oberhalb einer sich nach der Flotation deutlich im Tank 11 ausbildender Trennschicht entstehender Schaum im Tank 11 verbleibt.

Der sich durch die Entspannung im Tank 11 bildende und aufsteigende Schaum ist durch die flotierten Feststoffe absolut stabil und bildet eine klare Trennschicht zur Klarphase, so daß die Trennung des Trubs vom blanken Most am Ende des Ablassens quasi "punktgenau" möglich ist. Der stabile Schaum, der im Tank 11 verbleibt, wird ausgespritzt, da der Trub so trocken ist, daß eine weitere Aufarbeitung des Trubes nicht notwendig ist. Die Klarphase kann bei diesem Verfahren sauber bis zur klaren Trennschicht abgezogen werden.

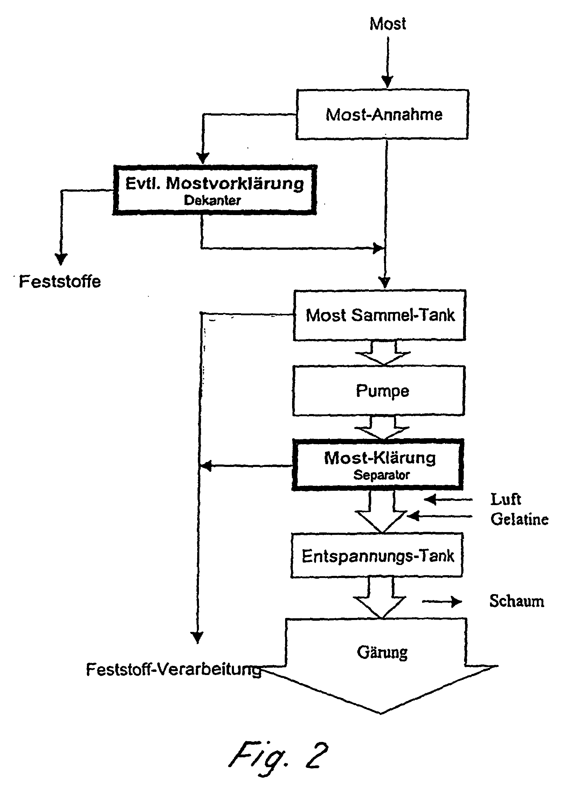

Fig. 2 veranschaulicht die Einbettung des erfindungsgemäßen Verfahrens in die Weinherstellung. Optional kann eine Mostvorklärung mit einem Dekanter durchgeführt werden. Die aus dem Dekanter und/oder einer Pumpe und/oder dem Separator abgeleiteten Feststoffe werden getrennt weiter verarbeitet und/oder entsorgt.

### Bezugszeichen

- Tank: 1
- Leitung: 3
- Pumpe: 5
- Klärseparator: 7
- Ablauf: 9
- Entspannungstank: 11
- Konstantdruckventil: 13
- Flotationseinrichtung: 15
- Gelantinetank: 17
- Pumpe: 19
- Leitungen: 21
- Mischer: 23
- Feststoffaustrag: 25
- Leitung: 27

## Patentansprüche

1. Zentrifugale Trennvorrichtung, insbesondere Separator, zur Klärung von Most bei der Herstellung von Wein, mit einem Ablauf, in den ein Konstantdruckventil, geschaltet ist, die eine Flotationseinrichtung (15) aufweist, **dadurch gekennzeichnet, daß** die Flotationseinrichtung im Ablauf (9) der Trennvorrichtung vor das Konstantdruckventil (13) geschaltet ist.

2. Trennvorrichtung nach Anspruch 1, **dadurch gekennzeichnet, daß** die Flotationseinrichtung eine Misch- und/oder Dosiereinrichtung zur Einbringung von Gas und/oder Gelatine und/oder anderen Zusatzstoffen in den aus der Trennvorrichtung (7) abgeleiteten, geklärten Most aufweist.

3. Trennvorrichtung nach Anspruch 2, **dadurch gekennzeichnet, daß** die Mischund/oder Dosiereinrichtung ein statischer Mischer (23) ist.

4. Trennvorrichtung nach Anspruch 2, **dadurch gekennzeichnet, daß** die Flotationseinrichtung als direkte Rohrzuleitung in den Ablauf (9) ausgebildet ist..

5. Verfahren zur Klärung von Most bei der Herstellung von Wein mit einer zentrifugalen Trennvorrichtung, insbesondere mit einem Separator, in deren Ablauf ein Konstantdruckventil geschaltet ist, **dadurch gekennzeichnet, daß** der in der Trennvorrichtung geklärte Most nach Durchtreten der Trennvorrichtung und vor Durchtreten des Konstantdruckventils der Trennvorrichtung im Ablauf einem Zumischen von Gas und/oder Gelatine und/oder anderen Zusatzstoffen für eine Flotation unterzogen wird.

6. Verfahren nach Anspruch 5, **dadurch gekennzeichnet, daß** direkt vor dem Konstantdruckventil das Gas und/oder die Gelatine und/oder die anderen Zusatzstoffen in einen statischen Mischer dosiert werden.

7. Verfahren nach Anspruch 6, **dadurch gekennzeichnet, daß** dem Most bei der Flotation 1 bis 4 g/hl Gelatine zugesetzt werden.

8. Verfahren nach Anspruch 7, **dadurch gekennzeichnet, daß** dem Most bei der Flotation 2 bis 3 g/hl Gelatine zugesetzt werden.

9. Verfahren nach einem der Ansprüche 5 - 8, **dadurch gekennzeichnet, daß** dem Most bei der Flotation 60-70 l/m³ Luft zugesetzt werden.

10. Verfahren nach einem der Ansprüche 5 bis 9, **dadurch gekennzeichnet, daß** der Most nach der Flotation einem Entspannungstank zugeleitet wird.

11. Verfahren nach Anspruch 10, **dadurch gekennzeichnet, daß** der Most aus dem Entspannungstank nach unten hin abgelassen wird, so daß oberhalb einer Trennschicht entstehender Schaum im Tank verbleibt.

## Claims

1. Centrifugal separation apparatus, in particular separator, for clarifying must in wine making, having an outlet into which is connected a constant-pressure valve, which apparatus has a flotation device (15), **characterized in that** the flotation device is connected in the outlet (9) of the separation apparatus upstream of the constant-pressure valve (13).

2. Separation apparatus according to Claim 1, **characterized in that** the flotation device has a mixing and/or metering device for introducing gas and/or gelatine and/or other additives into the clarified must which has been passed out of the separation apparatus (7).

3. Separation apparatus according to Claim 2, **characterized in that** the mixing and/or metering device is a static mixer (23).

4. Separation apparatus according to Claim 2, **characterized in that** the flotation device is designed as a direct pipe feed to the outlet (9).

5. Process for clarifying must in wine making using a centrifugal separation apparatus, in particular having a separator, in the outlet of which a constant-pressure valve is connected, **characterized in that** the must which has been clarified in the separation apparatus, after passing through the separation apparatus and before passing through the constant-pressure valve of the separation apparatus, in the outlet is subjected to mixing of gas and/or gelatine and/or other additives for a flotation.

6. Process according to Claim 5, **characterized in that** directly upstream of the constant-pressure valve the gas and/or the gelatine and/or the other additives are metering into a static mixer.

7. Process according to Claim 6, **characterized in that** during the floating 1 to 4 g/hl of gelatine are added to the must.

8. Process according to Claim 7, **characterized in that**, during the flotation, 2 to 3 g/hl of gelatine are added to the must.

9. Process according to any of Claims 5 - 8, **characterized in that**, during the flotation, 60 - 70 1/m³ of air are added to the must.

10. Process according to any of Claims 5 to 9, **characterized in that**, after the flotation, the must is passed to an expansion tank.

11. Process according to Claim 10, **characterized in that** the must is discharged from the expansion tank vertically downwards, so that foam produced above a separation layer remains in the tank.

## Revendications

1. Dispositif de séparation centrifuge, en particulier séparateur, pour la clarification du moût dans la production de vin, comportant une évacuation dans laquelle est montée une soupape de pression constante, lequel dispositif comporte un dispositif de flottation (15), **caractérisé en ce que** le dispositif de flottation est monté dans l'évacuation (9) du dispositif de séparation, en amont de la soupape de pression constante (13).

2. Dispositif de séparation selon la revendication 1, **caractérisé en ce que** le dispositif de flottation comporte un dispositif de malaxage et/ou de dosage pour introduire un gaz et/ou de la gélatine et/ou d'autres additifs dans le moût clarifié, dérivé du dispositif de séparation (7).

3. Dispositif de séparation selon la revendication 2, **caractérisé en ce que** le dispositif de malaxage et/ou de dosage est un mélangeur statique (23).

4. Dispositif de séparation selon la revendication 2, **caractérisé en ce que** le dispositif de flottation est réalisé en tant que tuyauterie d'arrivée directe dans l'évacuation (9).

5. Procédé de clarification de moût dans la production de vin comportant un dispositif de séparation centrifuge, en particulier un séparateur, dans l'évacuation duquel est montée une soupape de pression constante, **caractérisé en ce qu'**après avoir traversé le dispositif de séparation et avant de traverser la soupape de pression constante du dispositif de séparation, le moût clarifié dans le dispositif de séparation est soumis, dans l'évacuation, à un ajout de gaz et/ou de gélatine et/ou d'autres additifs pour une flottation.

6. Procédé selon la revendication 5, **caractérisé en ce que**, immédiatement en amont de la soupape de pression constante, le gaz et/ou la gélatine et/ou les autres additifs sont dosés dans un mélangeur statique.

7. Procédé selon la revendication 6, **caractérisé en ce qu'**on ajoute au moût lors de la flottation de 1 à 4 g/hl de gélatine.

8. Procédé selon la revendication 7, **caractérisé en ce qu'**on ajoute au moût lors de la flottation de 2 à 3 g/hl de gélatine.

9. Procédé selon l'une des revendications 5 à 8, **caractérisé en ce qu'**on ajoute au moût lors de la flottation de 60 à 70 l/m³ d'air.

10. Procédé selon l'une des revendications 5 à 9, **caractérisé en ce qu'**après la flottation, le moût est acheminé vers une cuve de détente.

11. Procédé selon la revendication 10, **caractérisé en ce que** le moût est évacué de la cuve de détente, vers le bas, de sorte qu'il reste dans la cuve, de la mousse en formation au-dessus d'une couche de séparation.
